(19) Europäisches Patentamt
European Patent Office
Office européen des brevets

(11) Publication number : 0 361 125 B1

(12) # EUROPEAN PATENT SPECIFICATION

(45) Date of publication of patent specification : 31.07.91 Bulletin 91/31

(51) Int. Cl.$^5$ : E04B 1/98

(21) Application number : 89116181.2

(22) Date of filing : 01.09.89

(54) **Damping device for tower-like structure.**

(30) Priority : 08.09.88 JP 223498/88
20.04.89 JP 98694/89
07.07.89 JP 174273/89

(43) Date of publication of application : 04.04.90 Bulletin 90/14

(45) Publication of the grant of the patent : 31.07.91 Bulletin 91/31

(84) Designated Contracting States : BE DE ES FR GB IT NL

(56) References cited : GB-A- 2 194 017

(73) Proprietor : Kawasaki Jukogyo Kabushiki Kaisha
1-1 Higashikawasakicho 3-chome Chuo-ku
Kobe-shi Hyogo 650-91 (JP)

(72) Inventor : Sakai, Fujikazu
2-22-12, Takaidohigashi
Suginami-ku Tokyo 168 (JP)
Inventor : Takaeda, Shingo
5-4-1-403, Nishifuna
Funabashi-shi Chiba 273 (JP)
Inventor : Tamaki, Toshihiro
9-9, Miyama
Funabashi-shi Chiba 274 (JP)

(74) Representative : Reinhard, Skuhra, Weise
Friedrichstrasse 31, P.O. Box 44 01 51
W-8000 München 40 (DE)

EP 0 361 125 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a damping device for suppressing vibration of a tower-like structure due to the wind or earthquake.

Recently, as techniques for suppressing vibration of a tower-like structure such as a high-rise building and a tower of a suspension bridge or a cable-stayed bridge due to the wind or earthquake, there has been proposed various damping devices based on the principle of a dynamic vibration damper.

Generally, the principle of the dynamic vibration damper is to absorb a vibration energy of the structure by providing a natural frequency tuned to a natural frequency of the structure and also providing a suitable damping mechanism. The principle has been realized in various forms.

A typical form employs the combination of a mass, a spring and a damper. However, such a dynamic damper has the following problems.

(1) It is hard to adjust the natural frequency.

(2) Maintenance is required for deterioration due to age of the spring, the damper or the like.

(3) The composition and the mechanism are complicated.

(4) A space for accommodating the damping device is limited.

Recently, as one of means for solving the above problems, there has been proposed in Japanese Patent Laid-open Publication Nos. 62-101764, 62-292943 and 63-172092 a dynamic vibration damper utilizing a liquid free surface wave motion (sloshing) in a liquid-filled tank. In this dynamic vibration damper, the natural frequency of the sloshing is tuned to that of the structure, and the damping mechanism is formed by providing a porous member or the like in the liquid as an obstacle against the motion of the liquid. However, such a dynamic vibration damper has the following problems.

(1) The sloshing action in response to the vibration having a large amplitude is very complex, and it is therefore hard to calculate a damping effect from the natural frequency and the damping property.

(2) The damping property of the porous member or the like is indefinite, and the calculation thereof is difficult.

(3) A space for mounting the damping device is limited due to a size or the like of the liquid-filled tank.

### SUMMARY OF THE INVENTION

It is an object of the present invention to provide a damping device which may precisely exhibit a desired damping function and increase a degree of freedom of the mounting space in the structure.

According to the present invention, there is provided a damping device for a tower-like structure, comprising a liquid column tube having an arbitrary shape and a pair of opposite rising end portions thereof where liquid levels are formed, and an orifice provided at an intermediate portion in said liquid column tube, said liquid column tube being mounted to said tower-like structure.

When the tower-like structure is vibrated, the liquid in the liquid column tube is oscillated in the longitudinal direction of the tube to cause vertical vibration of the liquid levels. At this time, the oscillation of the liquid is suitably damped by the orifice to thereby suppress the vibration of the structure. As the motion of the liquid is one-dimensional, a damping factor can be freely controlled.

Other objects and features of the invention will be more fully understood from the following detailed description and appended claims when taken with the accompanied drawings.

### BRIEF DESCRIPTION OF THE DRAWINGS

Fig. 1 is a schematic illustration of the damping device according to the present invention ;

Fig. 2 is a graph showing the relationship between the response magnification of the tower-like structure and the input to natural frequency ratio ;

Fig. 3 is a graph showing the relationship between the response value $R_D$ of the liquid column and the damping factor $h_D$ of the damping device ;

Fig. 4a is a graph showing the relationship between the response value $R_S$ of the structure and the damping factor $h_D$ of the damping device ;

Fig. 4b is a graph showing the relationship between the response value $R_D$ of the damping device and the damping factor $h_D$ of the damping device ;

Fig. 4c is a graph showing the relationship between the response value $R_D$ of the damping device and the damping factor $h_D$ of the damping device ;

Fig. 5 is a schematic illustration of the damping device applied to a structure according to the present invention ;
Fig. 6 is a perspective view of the damping device wherein the liquid column tube is bypassed ;
Fig. 7a is an elevational view of a preferred embodiment of the damping device applied to a spherical structure according to the present invention ;
Fig. 7b is a top plan view of Fig. 7a ;
Fig. 8 is an elevational view of another preferred embodiment as modified from Figs. 7a and 7b ;
Fig. 9 is a perspective view of a further preferred embodiment of the damping device applied to a structure under construction ;
Fig. 10 is an elevational view of a further preferred embodiment of the damping device applied to a creeper crane ;
Fig. 11 is an elevational view of a further preferred embodiment of the damping device applied to an observatory ;
Fig. 12a is a sectional view in elevation of the variable orifice according to the present invention ;
Fig. 12b is a sectional view in side of Fig. 12a ;
Fig. 13a is a sectional view in elevation of another embodiment of the variable orifice ;
Fig. 13b is a sectional view in side of Fig. 13a ;
Figs. 14 and 15 are sectional views of further modifications of the variable orifice ;
Fig. 16a is a perspective view of the combined two liquid column tubes arranged in a T-shaped configuration ;
Fig. 16b is a perspective view of the combined two liquid column tubes arranged in a crossed configuration;
Fig. 17 is a perspective view of the loop-like closed liquid column tube according to the present invention; and
Fig. 18 is an elevational view of a preferred embodiment of the damping device having a liquid column tube variable in length.

## DETAILED DESCRIPTION OF THE PREFERRED EMBODIMENTS

There will now be described some preferred embodiments of the present invention with reference to the drawings.

Referring to Fig. 1 which shows a preferred embodiment of the present invention, reference numeral A designates a damping device for a tower-like structure (not shown), which will be hereinafter referred to as a structure. The damping device A is comprised of a liquid column tube 1 to be located at a portion of the structure where displacement due to vibrations are large, a liquid 2 contained in the liquid column tube 1, and an orifice 3 fixedly provided in the liquid column tube 1. A pair of liquid levels 2a of the liquid 2 are present at opposite rising end portions of the liquid column tube 1. A sectional shape of the liquid column tube 1 may be optional such as circular or rectangular (square, oblong, etc.). Further, the liquid column tube 1 may be optionally curved in the longitudinal direction thereof.

When the structure is vibrated in the directions of a double-headed arrow S shown in Fig. 1, the liquid levels 2a are oscillated in the vertical directions of double-headed arrows B. While the vertical motion of the liquid is damped by a damping ability of the liquid 2 itself, it is primarily damped by the orifice 3.

A vibrational energy of the structure is absorbed by the oscillating motion of the liquid 2 in the liquid column tube 1 to damp the vibration of the structure. Suitable setting of the damping factor of the orifice contributes to a good efficiency of absorption of the vibrational energy. A plurality of the orifices 3 may be provided.

Such a damping device will be hereinafter referred to as TLCD (Tuned Liquid Column Damper).

Letting S and B denote displacements of the structure and the liquid levels 2a, respectively, an equation of motion of the liquid 2 in the liquid column tube constituting the damping device is expressed as follows :

$$\rho AL\ddot{B} + (1/2)\rho AK|\dot{B}|\dot{B} + 2\rho AgB = -\rho AC\ddot{S}$$

where ρ is a density of the liquid ; g is a gravitational acceleration ; A is a sectional area of the liquid column tube 1 ; L is a length between both the liquid levels 2a along the liquid column tube 1 ; C is a horizontal distance between both the liquid levels 2a ; and K is a coefficient (pressure loss coefficient) depending upon an opening ratio of the orifice 3. Further, $\dot{B}$ is the first derivative of B with respect to time, and $\ddot{B}$ and $\ddot{S}$ are the second derivatives of B and S with respect to time, respectively.

In the above equation, the right-hand side represents a term for vibrating the liquid 2 which term can also function as a reaction for suppressing the vibration of the tower-like structure. The first and third terms on the left-hand side of the equation represent a mass effect and a spring effect, respectively. From both the terms, a natural period T of the vibration of the liquid column can be obtained as follows :

$$T = 2 \pi \sqrt{L/2g}$$

The second term on the left-hand side of the equation represents a damping property of the vibration of the liquid 2 by the orifice 3 provided in the liquid column tube 1. The damping property has an important role in a damping operation for the vibration of the structure. That is, in order to exhibit a sufficient damping effect by the vibration of the liquid column and thereby damp the vibration of the structure, the damping property must be quantitatively defined as an optimum value. In the prior art damping device including a porous member or the like, the damping property could not be easily quantitatively defined. To the contrary, as the damping device of the present invention employs an orifice, and the pressure loss coefficient K is given as a known constant, the quantitative definition of the damping property can be realized easily and reliably. Thus, according to the present invention, the calculation of the damping effect and the designing of the TLCD can be conducted easily and reliably by providing the orifice in the liquid column tube.

Fig. 2 shows an example of calculation of a response curve which indicates that the vibration of the tower-like structure can be damped by the provision of the TLCD. In this graph, an axis of ordinate denotes a response magnification of the tower-like structure, while an axis of abscissa denotes an input to natural frequency ratio to be obtained by (frequency of an external force)/(natural frequency of the tower-like structure).

In this manner, the equation of motion can be quantitatively defined simply and reliably. Therefore, the TLCD as the damping device can be designed simply as shown by charts in the following manner.

A simple designing method for the TLCD will now be described. The natural period T of the vibration of the liquid column tube is obtained as mentioned above. On the other hand, the natural frequency of the structure can be obtained according to data in designing the structure. Accordingly, the length L is decided in such a manner that a ratio between the natural frequency of the structure and the natural frequency of the TLCD or the liquid column tube, that is, a tuning ratio is approximated to 1.

Fig. 3 is a graph showing the relationship between a response value $R_D$ (shown by an axis of ordinate) indicative of a displacement of the liquid column due to the vibration and a damping factor $h_D$ of the damping device (shown by an axis of abscissa). The relationship varies with a change in an opening ratio $\alpha$ of the orifice. As shown in the graph, the opening ratio $\alpha_1$ is larger than the opening ratio $\alpha_2$, and the opening ratio $\alpha_2$ is larger than the opening ratio $\alpha_3$. As apparent from the graph, $R_D$ is substantially proportional to $h_D$, and the smaller the opening ratio $\alpha$, the smaller a gradient of the straight line (which is inclined to be parallel to the axis of abscissa), that is, the larger the damping factor.

Fig. 4a is a graph showing the relationship between a response value $R_S$ of the structure and the damping factor $h_D$ of the damping device. In this graph, $\mu$ ($\mu_1 < \mu_2 < \mu_3$) represents (effective mass of the damping device)/(generalized mass of the structure). As apparent from the graph, the response value $R_S$ decreases with an increase in the damping factor $h_D$ up to a certain degree, and increases with a further increase in the damping factor $h_D$ from the certain degree. $R_{SL}$ stands for a permissible limit of an amplitude of the structure, and a dotted line lying on the permissible limit $R_{SL}$ and extending parallel to the axis of abscissa can intersect some of the curved lines. According to the value of $\mu$ is in this case, the effective mass of the damping device, that is, the size of the damping device can be decided. In the case of $\mu = \mu_2$, the dotted line intersects the curved line of $\mu_2$ at two points $h_{DA}$ and $h_{DB}$. Accordingly, if the damping factor $h_D$ falls within the range between $h_{DA}$ and $h_{DB}$, the value of the structure can be made not greater than the permissible limit $R_{SL}$. An optimum value of the damping factor $h_D$ is represented by $h_{Dopt}$ present at an intermediate point between $h_{DA}$ and $h_{DB}$.

Fig. 4b is a graph showing the relationship between the response value $R_D$ (shown by the axis of ordinate) of the damping device due to the vibration and the damping factor $h_D$ (shown by the axis of abscissa) of the damping device. As apparent from the graph, the relationship varies with a change in the value of $\mu$. It is appreciated that the larger the damping factor $h_D$, the smaller the response value $R_D$, and that the smaller the damping factor $h_D$, the rapidly larger the response value $R_D$. $R_{DL}$ stands for a permissible limit of the response value of the liquid column, and it depends upon a movable range of the liquid levels 2a which range also depends on a clearance of the damping device. $R_{DO}$ stands for a response value of the liquid column at the optimum damping factor $h_{Dopt}$ in the case of $\mu_2$, and it is set to be smaller than the permissible limit $R_{DL}$.

Fig. 4c is a graph showing the relationship between the response value $R_D$ (shown by the axis of ordinate) of the damping device due to the vibration and the damping factor $h_D$ (shown by the axis of abscissa) of the damping device, wherein the damping factor $h_D$ varies with a change in the opening ratio $\alpha$ of the orifice. It is appreciated that the intersection between a horizontal dotted line corresponding to the optimum response value $R_{DO}$ and a vertical dotted line corresponding to the optimum damping factor $h_{Dopt}$ obtained in Fig. 4a lies on a

straight line of $\alpha_2$.

Thus, the optimum damping factor $h_{Dopt}$ and the other characteristic values of the damping device are decided.

Each of the graphs shown in Figs. 3 and 4 can be obtained by calculation regarding the liquid column tube and the orifice, and it is clearly quantitatively defined. In the prior art damping device utilizing the sloshing, such a quantitative definition of the damping factor was difficult because of the complexity of the sloshing motion and the damping property by the porous member. According to the present invention, the quantitative definition of the damping factor can be easily carried out by utilizing the orifice in the liquid column tube to improve the performance of the damping device and render the manufacturing easy.

Fig. 5 is a schematic side elevation of a preferred embodiment of the present invention in the case of a primary vibration mode, wherein the damping device A is normally located in the vicinity of the top of a tower-like structure 4 where the greatest effect can be exhibited. On the other hand, in the case of a secondary vibration mode, the damping device may be located in the vicinity of the intermediate portion of the structure since the amplitude may become the maximum at this portion. Particularly in the case that the structure is a tower of a suspension bridge having a base at its lower end and fixed at its upper end by wires, the damping device is located at the intermediate portion of the tower where the displacement amplitude becomes the maximum.

Fig. 6 is a perspective view of an alignment of the liquid column tube 1 in the case that an obstacle 5 is present in the tower-like structure 4 where the damping device A is to be located. In the prior art, if such an obstacle 5 is present, the damping device could not be located because of the obstacle 5 being in the way. In other words, it was necessary to assure a space for exclusive use by the damping device. According to the present invention, it is only necessary to provide a certain length of the liquid column tube 1. The shape of the tube 1 except at the opposite ends thereof is made at the planner's discretion. For example, even when the alignment is bypassed as shown, the natural frequency of the liquid column tube 1 is not affected. Accordingly, it is unnecessary to assure a space for exclusive use by the damping device. Additionally, as water is normally used for the liquid 2, it can also serve for various purposes such as fire-fighting or the like.

Figs. 7a and 7b show an embodiment wherein a pair of damping devices A are mounted to a spherical tower-like structure such as an elevated tank. The damping devices A of TLCD are so provided as to extend from the bottom of the tank toward the top thereof along the contour in such a manner as to be crossed at right angles as shown in Fig. 7b. In this embodiment, the vibration of the tank in all the directions on the mounting surface of the tank can be damped.

Fig. 8 shows an embodiment wherein a plurality of damping devices A are mounted to the spherical tank 6. This embodiment is effective in the case that the natural period of the vibration of the overall structure is short as compared with the embodiment of Figs. 7a and 7b.

Fig. 9 shows an embodiment wherein a pair of damping devices A of TLCD are located at positions of the structure 4 under construction where the vibration tends to occur. Since the tower-like structure 4 suffers the vibration due to the wind or earthquake not only after the completion of construction but also under construction, it is preferable to mount the damping device to the structure 4 even under construction. Reference numeral 7 designates a crane for constructing the tower-like structure.

Fig. 10 shows an embodiment wherein the damping device A is located in a crane 8 for constructing the tower-like structure 4 under construction. In the embodiment shown in Fig. 9, it is necessary to change the position of the damping device in accordance with upward extension of the structure 4. To the contrary, in the embodiment shown in Fig. 10, the crane 8 is a creeper crane or a similar crane which can be lifted in accordance with upward extension of the tower-like structure 4. Accordingly, the damping device A located in the crane 8 is maintained at the top portion of the tower-like structure 4 at all times to the completion of construction. That is, it is unnecessary to independently move the damping device per se.

Fig. 11 shows an embodiment wherein a plurality of damping devices A are mounted to an observatory as the tower-like structure 4. The damping devices A are located at window frames of the observatory in such a manner as to surround the same by taking into consideration a natural period, limited space and a esthetics. With this arrangement, the vibration of the observatory in every horizontal direction can be damped.

Figs. 12a and 12b show an embodiment wherein a variable orifice 11 adjustable in its opening ratio is used. The variable orifice 11 is composed of a pair of fixed members 10 and a pair of movable member 9. The fixed members 10 are fixed on opposite sides in the liquid column tube 1 having a rectangular cross-section. The movable members 9 are slidably engaged with the fixed members 10 in such a manner as to be movable in the directions of double-headed arrows shown in Figs. 12a and 12b. The movable members 9 are inserted through the opposite walls of the liquid column tube 1, and are sealed by a known watertight structure. A driving means (not shown) is connected to one or both of the movable members 9, and an operating handle (not shown) is connected to the driving means so as to move one or both of the movable members 9 into and out of the liquid column tube 1. In operation, when the handle is operated to move one or both of the movable members 9 to change an aperture 9a defined between the movable members 9, the opening ratio of the variable orifice 11 is adjusted to a desired value.

Figs. 13a and 13b show another embodiment of the variable orifice 11, wherein the fixing members 10 and the lower movable member 9 shown in Figs. 12a and 12b are omitted. That is, the upper movable member 9 alone is slidably inserted through the wall of the liquid column tube 1.

Fig. 14 shows a further embodiment of the variable orifice 11, wherein the movable member 9 is rotatably supported to a shaft 9b in the liquid column tube 1. The movable member 9 has a size enough to close a cross-section of the liquid column tube 1.

Fig. 15 shows a further embodiment of the variable orifice 11, wherein a pair of movable members 9 each having a segmental cross-section are rotatably provided in the liquid column tube 1 in opposed relationship to each other. The liquid column tube 1 is formed with a pair of arcuate recesses 1c for receiving the segmental movable members 9. The movable members 9 are connected with each other outside the liquid column tube, and are supported to a rotating shaft (not shown).

Thus, the use of the variable orifice 11 makes easy a change in the damping factor $h_D$ of the damping device. Further, when an amount of the liquid to be charged into the liquid column tube 1 is adjusted to change the length L of the liquid column between the opposite liquid levels 2a along the liquid column tube 1 in addition to the change in the damping factor $h_D$, the characteristics of the damping device can easily follow a change in conditions of the structure such as a change in the natural frequency even in the case that the damping device is applied to the structure under construction.

Figs. 16a and 16b show different embodiments wherein two liquid column tubes 1 and 1′ constituting the damping device of the present invention are combined to be arranged in perpendicular relationship to each other. Such perpendicular arrangement is intended to meet the requirement such that the vibration in two or more directions as well as in one direction must be absorbed. In the embodiment shown in Fig. 16a, the two liquid column tubes 1 and 1′ are arranged in a T-shaped configuration. Reference characters B and B′ denote distances between the opposite rising portions of the liquid column tubes 1 and 1′, respectively (which distances will be hereinafter referred to as rising distances), and reference characters W and W′ denote widths of the liquid column tubes 1 and 1′, respectively. Accordingly, it is necessary to define an installation space of $B' \times (B + W')$, and it is also necessary to charge the liquid 2 in an amount corresponding to the sum of the volumes of the liquid column tubes 1 and 1′. If the structure is large, not only the lengths of the liquid column tubes 1 and 1′ but also the widths thereof become several meters, resulting in enlargement of the installation space and the amount of the liquid.

In the embodiment shown in Fig. 16b, the two liquid column tubes 1 and 1′ are arranged in a crossed configuration to form a central intersecting conduit portion 1a as a common conduit portion of both the tubes 1 and 1′. A desired number of the orifices 3 are provided in the liquid column tubes 1 and 1′. In this embodiment, it is necessary to define an installation space of $B \times B'$. Accordingly, the installation space can be reduced as compared with the embodiment shown in Fig. 16 a. Further, an amount of the liquid 2 can be reduced by the volume of the intersecting conduit portion 1a. The intersecting conduit portion 1a may be formed at end portions of the liquid column tubes 1 and 1′.

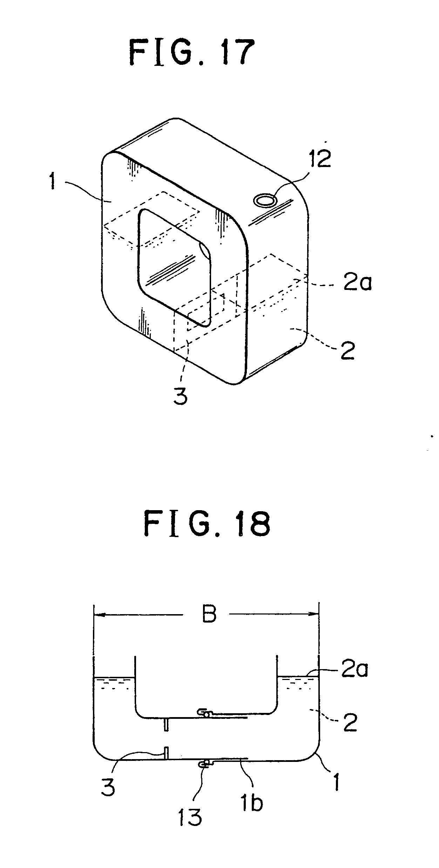

Fig. 17 shows an embodiment wherein the opposite rising portions are connected to each other to form a loop-like closed liquid column tube 1. The closed liquid column tube 1 is formed with a filler opening to be closed by a lid 12 for charging the liquid 2 or an inert gas to be hereinafter described. In the embodiment shown in Fig. 1, the opposite rising portions of the liquid column tube 1 is open at their upper ends. Accordingly, the liquid in the tube 1 vaporizes after a long period of time to cause a reduction in damping effect. Further, if an unexpected vibration having a large amplitude is excited in the liquid column tube 1, the liquid can overflow. Moreover, rust and corrosion tend to be generated on the inner wall of the liquid column tube 1 in the vicinity of the liquid levels 2a.

To the contrary, the closed liquid column tube 1 as shown in Fig. 17 can prevent the vaporization of the liquid 2 and the overflowing of the liquid 2 upon generation of a large amplitude. Further, the generation of rust or the like on the inner wall of the tube 1 in the vicinity of the liquid levels 2a can be prevented by filling an inert gas in the tube 1.

The vibration characteristics of the tower-like structure under construction change with a step of construction. Such a change in the characteristics can be followed to some extent by changing an amount of the liquid in the liquid column tube as mentioned previously. However, there are many cases where the change in the characteristics cannot be followed only by the change in the amount of liquid. In these cases, it is necessary to replace the liquid column tube 1 with a longer or shorter one. Such replacement is troublesome and uneconomical.

Fig. 18 shows an embodiment which eliminates the above disadvantages, wherein the length of a horizontal portion of the liquid column tube 1 is adjustable. That is, the horizontal portion is provided with a slidable portion 1b watertightly sealed by a packing 13. With this arrangement, the rising distance B of the liquid column tube 1 is changed by sliding the slidable portion 13, thereby changing the length L between the liquid levels 2a along the liquid column tube 1.

Accordingly, the vibration characteristics can be made optimal in accordance with a step of construction by changing the length of the damping device as well as the amount of the liquid in the damping device. Even under construction of the tower-like structure, the vibration characteristics can be easily changed with a damping function maintained still.

The liquid to be used with the damping device is normally water. However, if the water is frozen in a cold district, the damping function cannot be exhibited. Accordingly, it is necessary to prevent the freezing of the water by continuously supplying heat from a heat source, causing an increase in maintenance cost of the damping device.

Such a disadvantage can be eliminated by mixing an antifreezing fluid such as ethylene glycol with the water.

As described above, the following effects can be exhibited according to the damping device of the present invention.

(1) As the orifice which has clear mechanism is used, the characteristic values can be easily quantitatively defined to thereby obtain a high-performance damping device.

(2) As a change in natural frequency of the structure in concert with the proceeding of construction can be followed by changing the length of the liquid column tube and the amount of the liquid to be charged into the liquid column tube, the damping device can be easily applied to the structure under construction.

(3) As the shape of an intermediate portion of the liquid column tube can be appropriately selected with the length L of the tube given, a degree of freedom of an installation space in the structure can be increased.

(4) As a damper or the like which is susceptible to aging is not used, the maintenance of the damping device is easy.

(5) In the case of using a variable orifice, a change in conditions of the structure can be followed easily.

(6) By combining two liquid column tubes and intersecting the conduits of the tubes to form a common intersecting conduit portion, an installation space for the damping device and an amount of the liquid to be charged into the damping device can be reduced, and the vibration in all the directions can be damped by the damping device.

(7) By forming the liquid column tube into a loop-like closed configuration, the vaporization of the liquid in the liquid column tube and the generation of rust or the like on the inner wall of the liquid column tube can be prevented.

(8) By mixing an antifreezing fluid with water as the liquid to be changed into the damping device, the freezing of the water at a cold district can be prevented without the necessity of provision of a heat source or the like, thereby facilitating the maintenance work.

## Claims

1. A damping device (A) for a tower-like structure (4), comprising a liquid column tube (1, 1′) having a pair of opposite rising end portions thereof where liquid levels (2A) are formed, and an orifice (3, 3′) provided at an intermediate portion in said liquid column tube, said liquid column tube being mounted to said tower-like structure.

2. A damping device (A) for a tower-like structure (4), comprising a liquid column tube (1, 1′) having a pair of opposite rising end portions thereof where liquid levels (2A) are formed, and an orifice (3, 3′) provided at an intermediate portion in said liquid column tube, said liquid column tube being mounted to a body of a crane (7) for constructing said tower-like structure.

3. The damping device as defined in claim 1 or 2, wherein said orifice (3, 3′) is a variable orifice adjustable in its opening ratio.

4. A damping device (A) for a tower-like structure (4), comprising two liquid column tubes (1, 1′) each having a pair of opposite rising end portions thereof where liquid levels are formed, said two liquid column tubes being combined to intersect each other at respective horizontal portions to form a common intersecting conduit portion (1A), and an orifice (3, 3′) provided at an intermediate portion in each of said liquid column tubes, said combined liquid column tubes being mounted to said tower-like structure.

5. The damping device as defined in any one of claims 1 to 4, wherein said liquid column tube (1, 1′) is formed in a loop-like closed configuration by connecting said opposite rising end portions.

6. The damping device as defined in any one of claims 1 to 5, wherein said intermediate portion of said liquid column tube (1, 1′) is provided with a watertight sliding (1b) portion so as to change a length of said liquid column tube.

7. The damping device as defined in any one of claims 1 to 6, wherein an antifreezing fluid is mixed with a liquid in said liquid column tube (1, 1').

## Patentansprüche

1. Dämpfungsvorrichtung (A) für eine turmähnliche Struktur (4), bestehend aus einem Flüssigkeitssäulenrohr (1, 1') mit einem Paar gegenüberliegender ansteigender Endabschnitte, in denen Flüssigkeitspegel (2a) gebildet sind, und aus einer Öffnung (3, 3'), die in einem Zwischenabschnitt in dem Flüssigkeitssäulenrohr vorgesehen ist, wobei das Flüssigkeitssäulenrohr an der turmartigen Struktur montiert ist.

2. Dämpfungsvorrichtung (A) für eine turmähnliche Struktur (4), bestehend aus einem Flüssigkeitssäulenrohr (1, 1') mit einem Paar gegenüberliegender ansteigender Endabschnitte, in denen Flüssigkeitspegel (2a) gebildet sind, und aus einer Öffnung (3, 3'), die in einem Zwischenabschnitt in dem Flüssigkeitssäulenrohr vorgesehen ist, wobei das Flüssigkeitssäulenrohr an einem Gestell eines Kranes (7) zum Aufbau der turmartigen Struktur montiert ist.

3. Dämpfungsvorrichtung nach Anspruch 1 oder 2, dadurch gekennzeichnet, daß die Öffnung (3, 3') aus einer variablen Öffnung besteht, die in ihrem Öffnungsverhältnis einstellbar ist.

4. Dämpfungsvorrichtung (A) für eine turmartige Struktur (4), bestehend aus zwei Flüssigkeitssäulenrohren (1, 1') von denen jedes ein Paar gegenüberliegender ansteigender Endabschnitte besitzt, in denen Flüssigkeitspegel gebildet sind, wobei die beiden Flüssigkeitssäulenrohre miteinander in entsprechenden horizontalen einander kreuzenden Abschnitten vereinigt sind, um einen gemeinsamen Kreuzungsleitungsabschnitt (1a) zu bilden, und aus einer Öffnung (3, 3'), die in einem Zwischenabschnitt in jedem der Flüssigkeitssäulenrohre vorgesehen ist, wobei die kombinierten Flüssigkeitssäulenrohre an der turmartigen Struktur montiert sind.

5. Dämpfungsvorrichtung nach einem der Ansprüche 1 bis 4, bei der das Flüssigkeitssäulenrohr (1, 1') in einer schleifenförmigen geschlossenen Konfiguration durch Verbinden der beiden gegenüberliegenden ansteigenden Endabschnitte gebildet ist.

6. Dämpfungsvorrichtung nach einem der Ansprüche 1 bis 5, dadurch gekennzeichnet, daß der Zwischenabschnitt des Flüssigkeitssäulenrohres (1, 1') mit einem wasserdichten Gleitabschnitt (1b) zur Änderung der Länge des Flüssigkeitssäulenrohres versehen ist.

7. Dämpfungsvorrichtung nach einem der Ansprüche 1 bis 6, bei dem ein Rostschutzfluid mit einer Flüssigkeit in dem Flüssigkeitssäulenrohr (1, 1') vermischt ist.

## Revendications

1. Dispositif d'amortissement (A) pour structure en forme de tour (4), comprenant un tube à colonne liquide (1, 1') comportant deux parties extrêmes dressées vers le haut et se faisant face dans lesquelles il se forme des niveaux de liquide (2A), et un orifice (3, 3') ménagé dans une partie intermédiaire du tube à colonne de liquide, ce tube à colonne de liquide étant monté sur la structure en forme de tour.

2. Dispositif d'amortissement (A) pour structure en forme de tour (4), comprenant un tube à colonne liquide (1, 1') comportant deux parties extrêmes dressées vers le haut et se faisant face dans lesquelles il se forme des niveaux de liquide (2A), et un orifice (3, 3') ménagé dans une partie intermédiaire du tube à colonne de liquide, ce tube à colonne de liquide étant monté sur le corps d'une grue (7) servant à construire la structure en forme de tour.

3. Dispositif d'amortissement suivant l'une des revendications 1 et 2, dans lequel l'orifice (3, 3') est un orifice variable à coefficient d'ouverture réglable.

4. Dispositif d'amortissement (A) pour structure en forme de tour (4), comprenant deux tubes à colonne liquide (1, 1') comportant chacun deux parties extrêmes dressées vers le haut et se faisant face dans lesquelles il se forme des niveaux de liquide, ces deux tubes à colonne de liquide étant combinés de façon à se recouper à l'endroit de leurs parties horizontales respectives afin de former une partie commune de conduit d'intersection (1a), et un orifice (3, 3') ménagé dans une partie intermédiaire de chacun des tubes à colonne de liquide, ces tubes à colonne de liquide combinés étant montés sur la structure en forme de tour.

5. Dispositif d'amortissement suivant l'une quelconque des revendications 1 à 4, dans lequel le tube à colonne de liquide (1, 1') est conformé suivant une configuration fermée en forme de boucle au moyen de la réunion des parties extrêmes dressées vers le haut et se faisant face.

6. Dispositif d'amortissement suivant l'une quelconque des revendications 1 à 5, dans lequel la partie intermédiaire du tube à colonne de liquide (1, 1') comporte une partie télescopique (1b) étanche à l'eau de façon à permettre de faire varier la longueur du tube à colonne de liquide.

7. Dispositif d'amortissement suivant l'une quelconque des revendications 1 à 6, dans lequel un fluide antigel est mélangé au liquide se trouvant dans le tube à colonne de liquide (1, 1').

FIG. 1

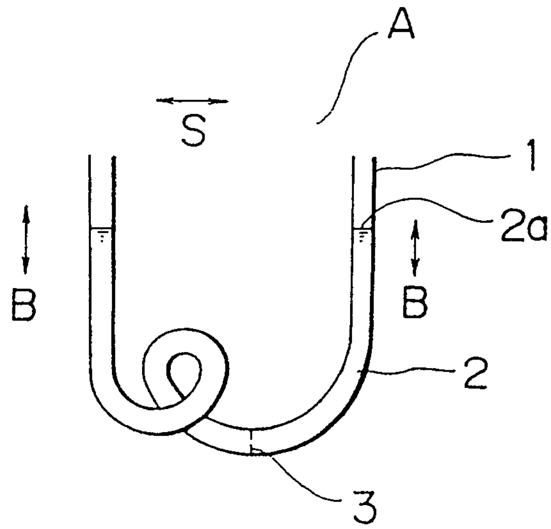


FIG. 3

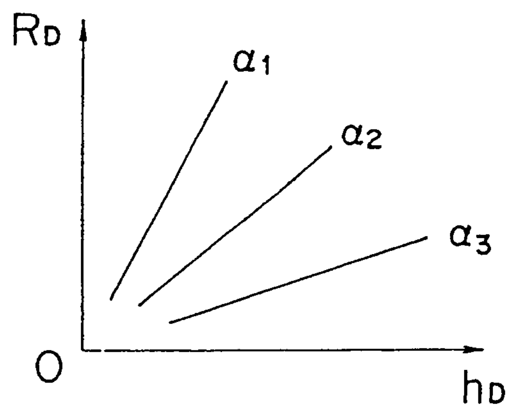

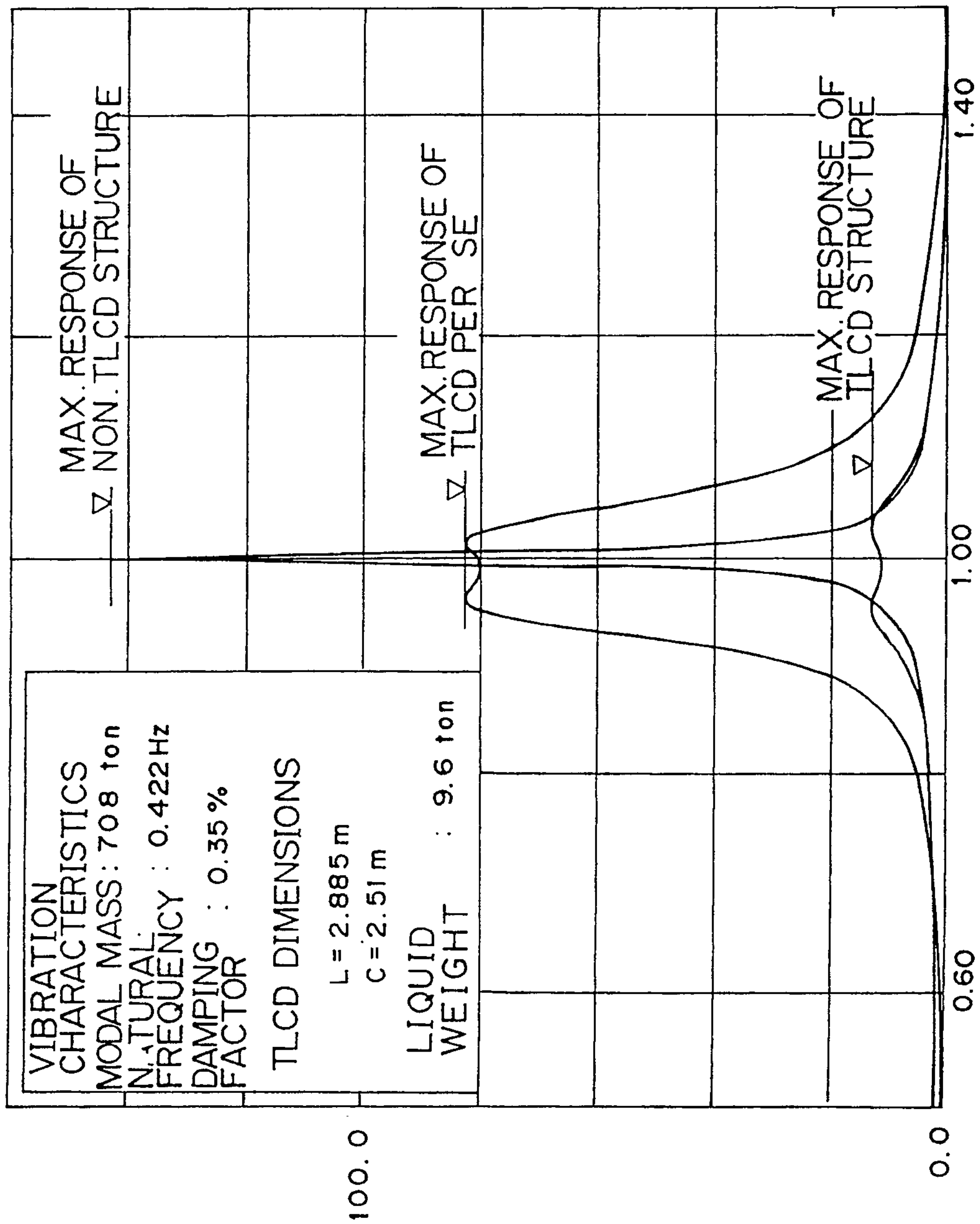

VIBRATION CHARACTERISTICS
MODAL MASS : 708 ton
NATURAL FREQUENCY : 0.422 Hz
DAMPING FACTOR : 0.35 %
TLCD DIMENSIONS
L = 2.885 m
C = 2.51 m
LIQUID WEIGHT : 9.6 ton
MAX. RESPONSE OF NON. TLCD STRUCTURE
MAX. RESPONSE OF TLCD PER SE
MAX. RESPONSE OF TLCD STRUCTURE
100.0
0.0
0.60
1.00
1.40


FIG. 2

FIG. 4a

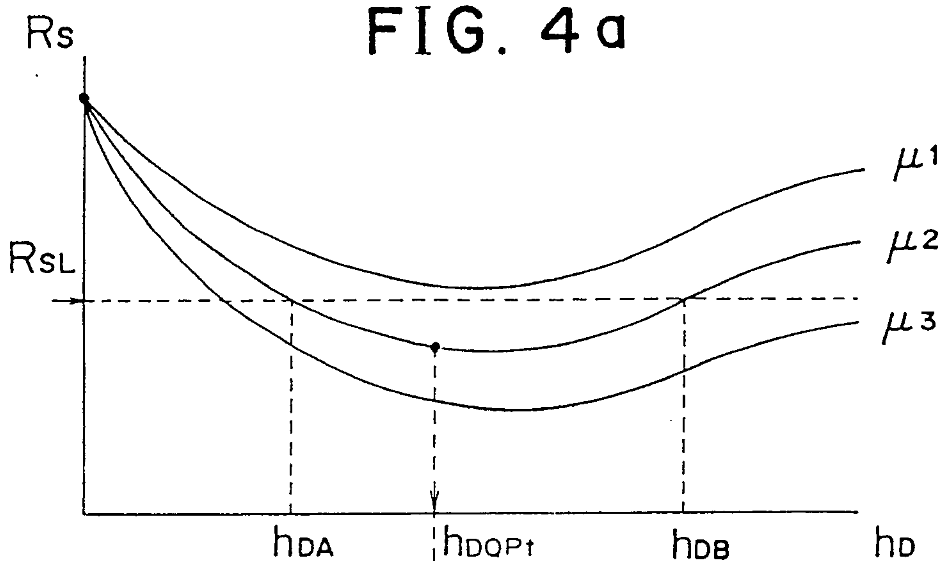


FIG. 4b

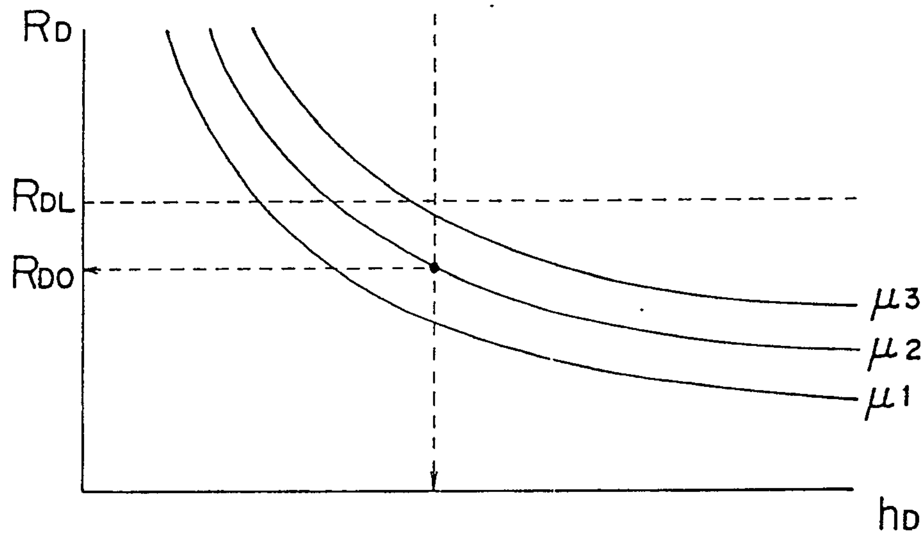


FIG. 4c

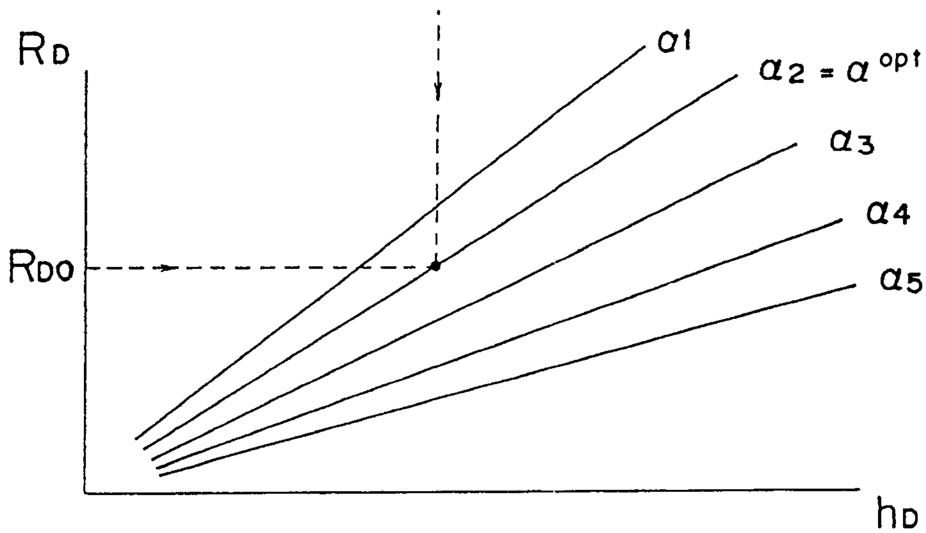

FIG. 5

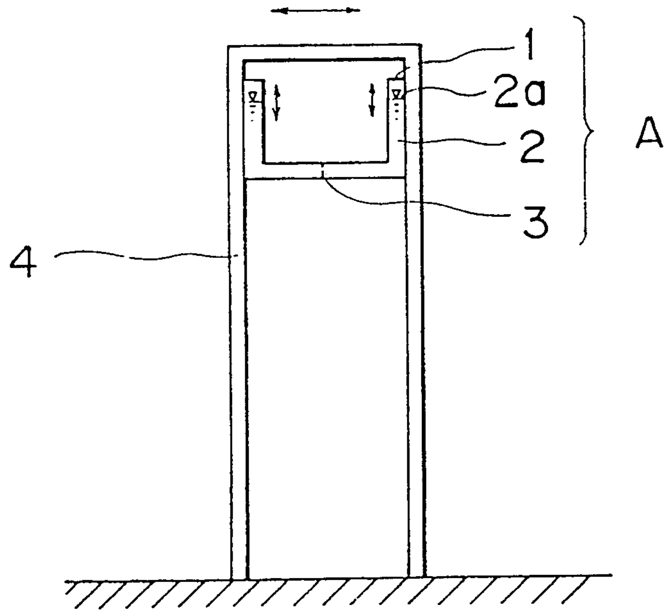


FIG. 6

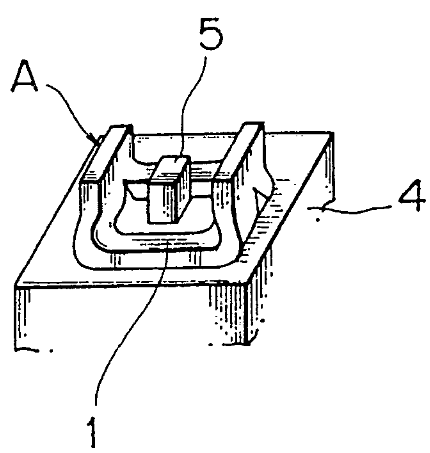

FIG. 7a

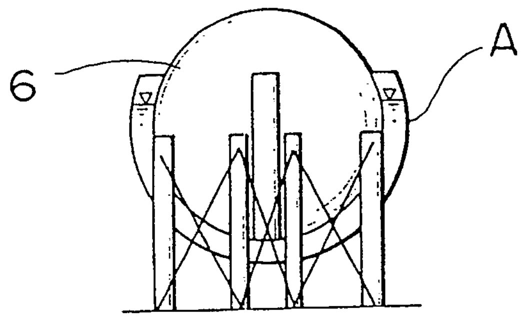


FIG. 7b

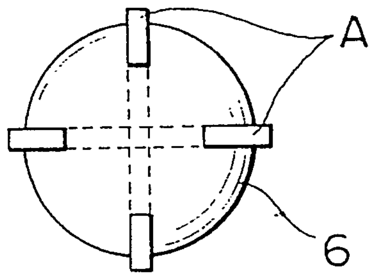


FIG. 8

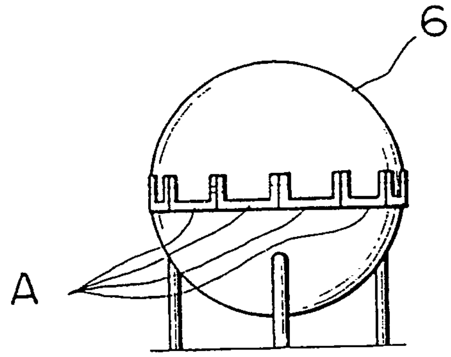

FIG. 9

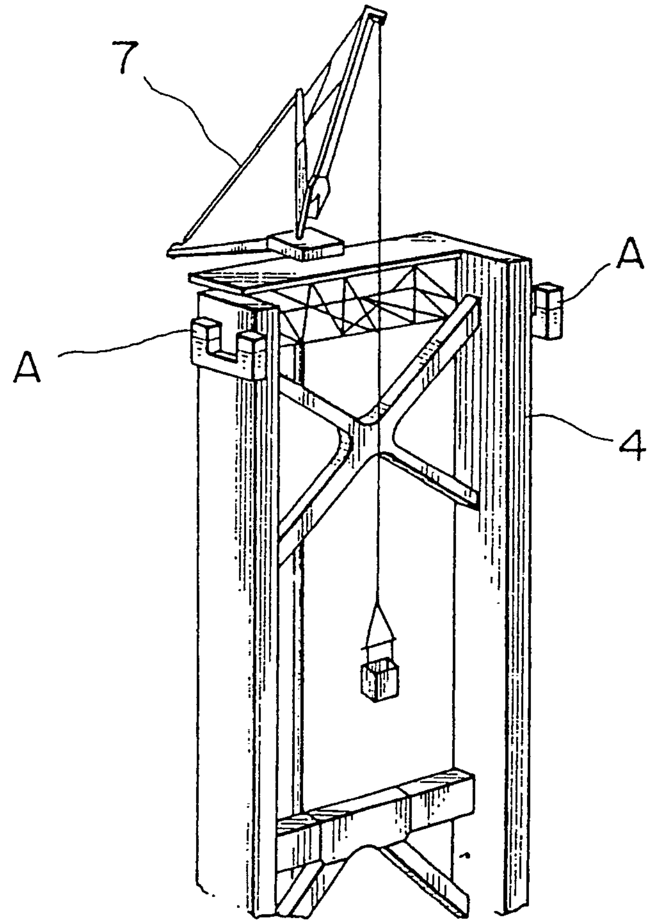


FIG. 10

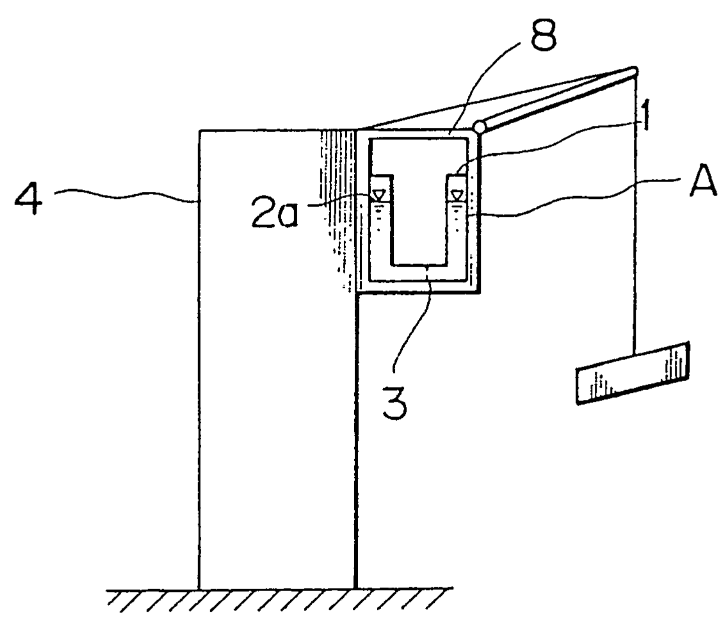

FIG. 11

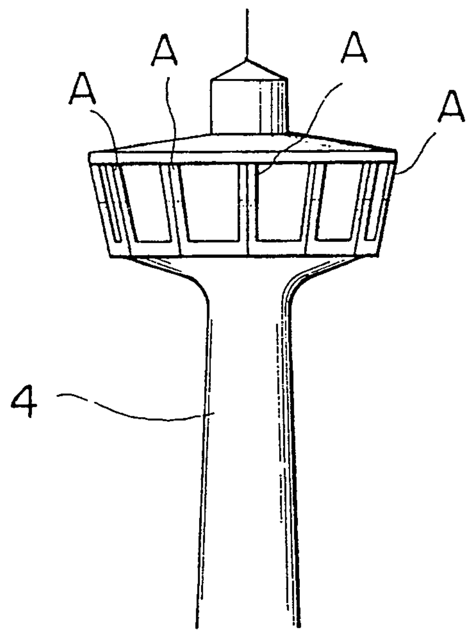


FIG. 12a

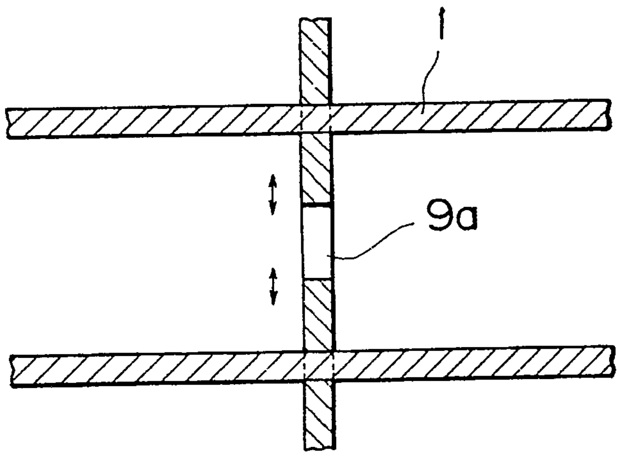

FIG. 12b

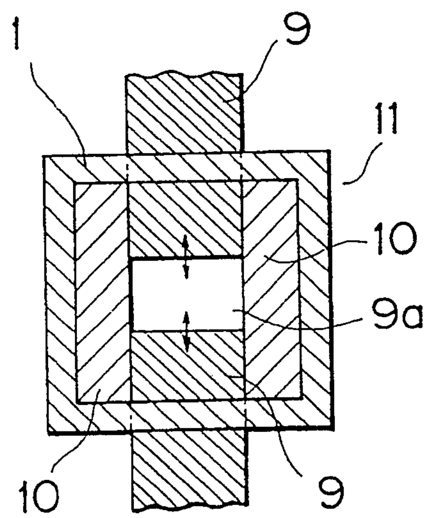


FIG. 13a

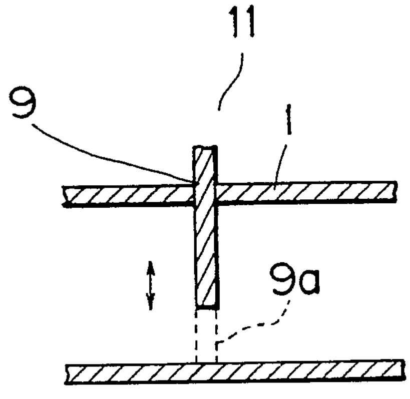


FIG. 13b

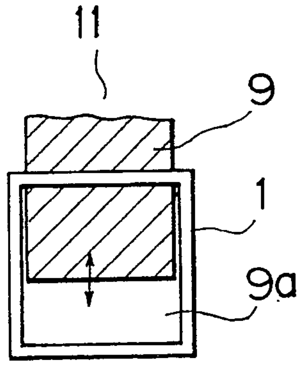

FIG. 14

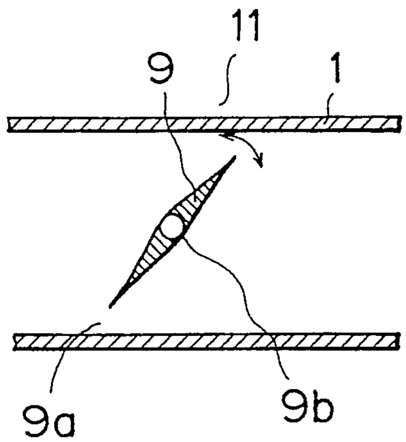


FIG. 15

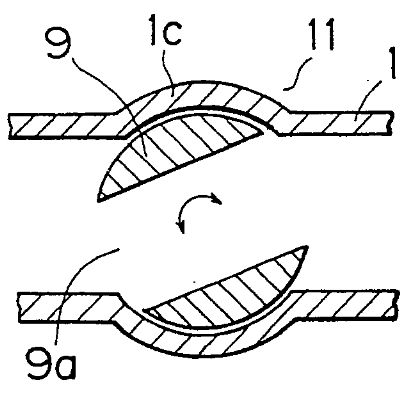

FIG. 16a

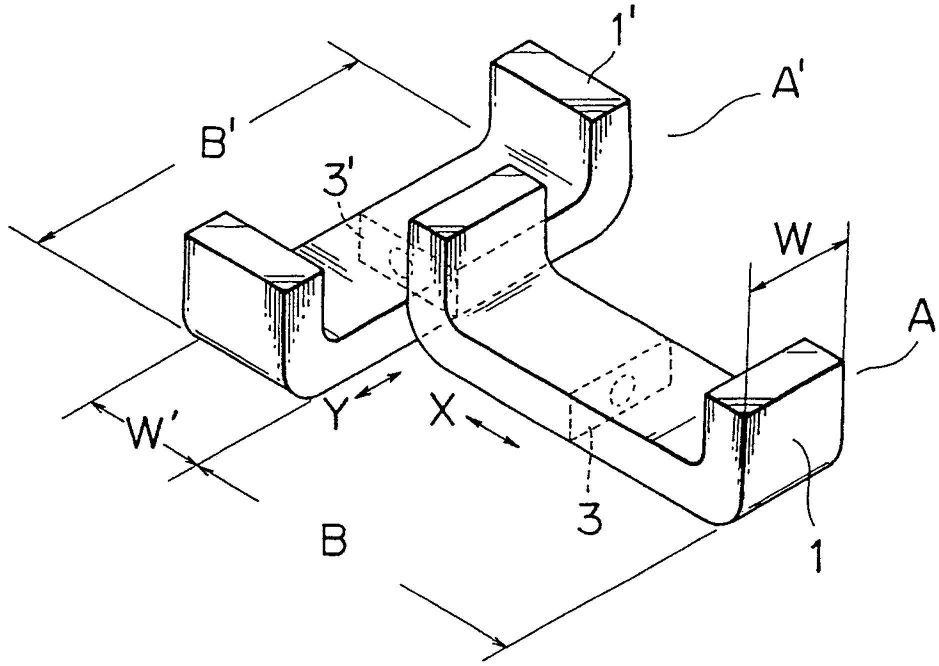


FIG. 16b

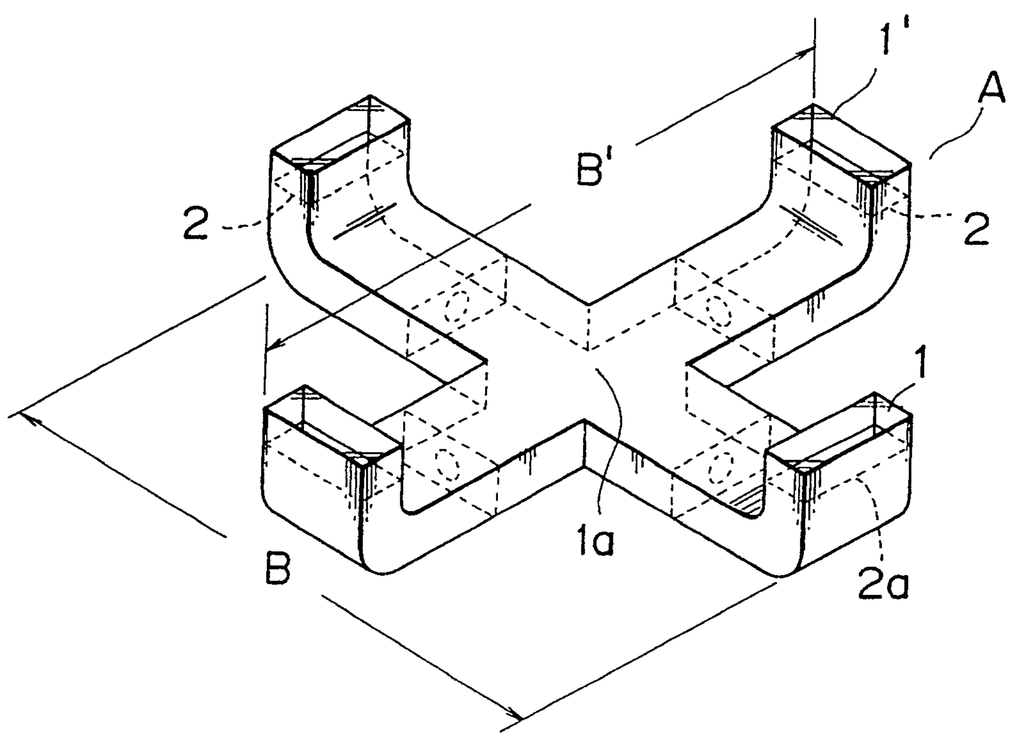

FIG. 17

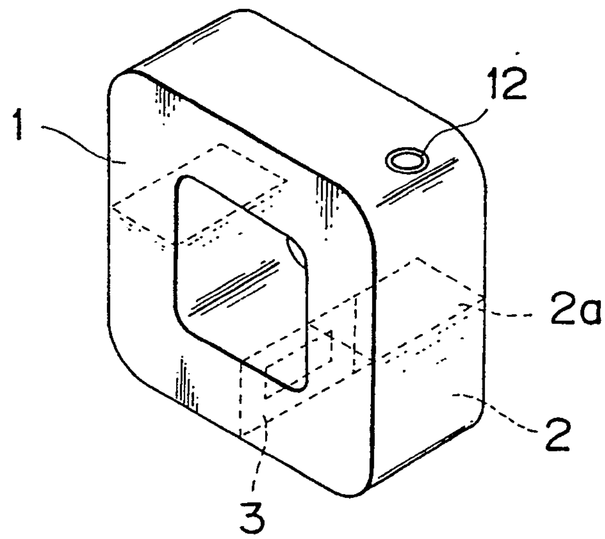


FIG. 18